# EUROPÄISCHE PATENTSCHRIFT

(11) **EP 1 724 162 B1**
(45) Veröffentlichungstag und Bekanntmachung des Hinweises auf die Patenterteilung: **03.12.2008**
(21) Anmeldenummer: 05010860.4
(22) Anmeldetag: 19.05.2005
(51) Int. Cl.: B60R 21/20

(54) **Instrumententafel mit einem Luftsackmodul und Herstellungsverfahren dafür**
Dashboard incorporating an airbag module and a method for manufacturing the same
Tableau de bord incorporant un module de sac gonflable et procédé de fabrication associé

(43) Veröffentlichungstag der Anmeldung: 22.11.2006
(73) Patentinhaber: Delphi Technologies, Inc., Troy, MI 48007 (US)
(72) Erfinder: Kansteiner, Udo, 58456 Witten (DE); Hannemann, Jens, 13127 Berlin (DE)
(74) Vertreter: Manitz, Finsterwald & Partner GbR

(56) Entgegenhaltungen:
- EP-A- 0 688 700
- EP-A- 1 106 446
- EP-A- 1 550 558
- WO-A-03/045738
- DE-A1- 10 117 938
- DE-A1- 10 135 224

## Beschreibung

Die Erfindung betrifft eine Instrumententafel für ein Kraftfahrzeug mit einem Schusskanal für einen sich aufblasenden Luftsack.

Eine derartige Instrumententafel ist grundsätzlich bekannt. Der Schusskanal dient dazu, den sich aufblasenden Luftsack in eine vorgegebene Richtung zulenken und dadurch die Ausbreitung des Luftsacks in einer Wunschausbreitungsrichtung sicherzustellen.

Herkömmlicherweise wird ein komplettes Luftsackmodul, bei welchem der Luftsack und ein Gasgenerator zum Aufblasen des Luftsacks zu einer Einheit zusammengefasst sind, an der Instrumententafel angebracht. Die Befestigung des Luftsackmoduls erfordert eine ausreichend stabile Trägerstruktur nicht nur an der Instrumententafel, sondern auch an dem Luftsackmodul selbst. Ein bekanntes Luftsackmodul weist aus diesem Grund üblicherweise ein Metallgehäuse auf, welches an der Trägerstruktur der Instrumententafel befestigbar, z.B. verschraubbar, ist.

Die Handhabung und insbesondere die Montage eines solchen Luftsackmoduls erweist sich nicht nur aus Gewichtsgründen als problematisch, sondern es besteht auch erhöhte Gefahr bei einer unbeabsichtigten Auslösung des Luftsackmoduls.

Ferner muss der Gasgenerator etwa alle 10 bis 12 Jahre zu Wartungszwecken ausgetauscht werden. Wegen der Einheit von Luftsack und Gasgenerator erfordert jeder Austausch des Gasgenerators eine Demontage des gesamten Luftsackmoduls von der Instrumententafel, was mit einem erheblichen Kostenaufwand verbunden ist.

Eine Instrumententafel gemäß dem Oberbegriff des Anspruchs 1 ist aus der EP-A-1 106 446 bekannt. Eine ähnliche Instrumententafel ist auch in der DE-101 17 938 beschrieben.

Die EP-A-1 550 588 bildet Stand der Technik nach Art. 54(3) EPÜ und offenbart eine Instrumententafel gemäß dem Oberbegriff des Anspruchs 1, bei welcher der Gasgenerator mittels einer Schelle an einer Außenseite des Luftsackgehäuses angebracht ist, wobei die Schelle den Gasgenerator im Bereich von Gasaustrittsöffnungen des Gasgenerators umgibt.

Der Erfindung liegt die Aufgabe zugrunde, eine Instrumententafel zu schaffen, welche eine einfachere und sicherere Montage sowie eine kostengünstigere Wartung eines Luftsackmoduls ermöglicht.

Zur Lösung der Aufgabe ist eine Instrumententafel mit den Merkmalen des Anspruchs 1 vorgesehen.

Die erfindungsgemäße Instrumententafel umfasst einen Schusskanal für einen sich aufblasenden Luftsack, wobei der Schusskanal gleichzeitig ein Luftsackgehäuse bildet, in welchem der Luftsack im zusammengefalteten Zustand untergebracht ist, und wobei ein Gasgenerator zum Aufblasen des Luftsacks mittels einer Schelle von dem Luftsack getrennt und gasdicht an einer Außenseite des Luftsackgehäuses angebracht ist.

Erfindungsgemäß sind der Luftsack und der Gasgenerator also nicht in einem gemeinsamen Gehäuse untergebracht, sondern sie stellen separate Bauteile dar, die jeweils getrennt voneinander an der Instrumententafel montiert sind.

So ist der Luftsack in einem Luftsackgehäuse untergebracht, welches durch den Schusskanal gebildet ist. Der Schusskanal erfüllt mit anderen Worten eine Doppelfunktion, indem er einerseits ein Gehäuse für den Luftsack bildet und den Luftsack dadurch an der Instrumententafel hält sowie vor äußeren Einflüssen schützt und andererseits eine Ausbreitung des sich aufblasenden Luftsacks in einer Wunschausbreitungsrichtung sicherstellt.

Aufgrund der von dem Luftsack getrennten Befestigung des Gasgenerators an dem Luftsackgehäuse lassen sich der Gasgenerator und der Luftsack unabhängig voneinander an der Instrumententafel anbringen. Dadurch ist die Montage der Komponenten des Luftsackmoduls an der Instrumententafel erheblich erleichtert.

Ist ein Austausch des Gasgenerators erforderlich, braucht lediglich der Gasgenerator von dem Luftsackgehäuse gelöst zu werden, während der zusammengefaltete Luftsack in dem Luftsackgehäuse verbleiben kann. Die Wartung des Gasgenerators kann somit wesentlich einfacher und mit einem geringeren finanziellen Aufwand durchgeführt werden.

Dadurch, dass der Luftsack und der Gasgenerator getrennt voneinander an der Instrumententafel angebracht werden, ist außerdem die Gefahr eines unbeabsichtigten Aufblasens des Luftsacks während der Montage minimiert. Dies führt nicht nur zu einer Vermeidung von zusätzlichen Kosten, die aus einer unbeabsichtigten Auslösung des Luftsacks während der Montage resultieren, sondern auch zu einer erhöhten Sicherheit für das Montagepersonal, da die Instrumententafel mit vormontiertem Luftsack kein Gefahrgut darstellt und der Gasgenerator alleine bei unbeabsichtigter Auslösung einen erheblich geringeren Rückstoß als ein Modul mit Luftsack besitzt. Dadurch wird die Verletzungsgefahr erheblich reduziert.

Die erfindungsgemäße Befestigung des Gasgenerators mittels einer Schelle an dem Luftsackgehäuse ermöglicht eine besonders einfache und kostengünstige Montage bzw. Demontage des Gasgenerators an bzw. von dem Luftsackgehäuse. Durch die Schelle lässt sich insbesondere ein Gasgenerator, der eine zylindrische Form aufweist, gut an dem Luftsackgehäuse befestigen.

Erfindungsgemäß umgibt die Schelle den Gasgenerator im Bereich von Gasaustrittsöffnungen des Gasgenerators. Die Schelle verhindert dadurch einen Austritt des Gases in einer unerwünschten Richtung und trägt somit zu einem noch effizienteren Aufblasen des Luftsacks bei.

Die Schelle bildet einen Gaskanal, um aus dem Gasgenerator austretendes Gas zu einer Gaszuführöffnung des Luftsackgehäuses zu führen. Gas, welches an verschiedenen Stellen des Gasgenerators austritt, beispielsweise aus mehreren über den Umfang eines zylindrischen Gasgenerators verteilt angeordneten Gasaustrittsöffnungen, wird durch die Schelle also kanalisiert und zu der Gaszuführöffnung und somit letztlich in den Luftsack geleitet. Dies ermöglicht ein noch schnelleres und effizienteres Aufblasen des Luftsacks.

Vorteilhafte Ausbildungen der erfindungsgemäßen Instrumententafel sind den Unteransprüchen, der Beschreibung und der Zeichnung zu entnehmen.

Gemäß einer bevorzugten Ausführungsform ist der Schusskanal durch ein separates Kanalformteil gebildet. Dies ermöglicht es, den zusammengefalteten Luftsack zunächst in dem Schusskanal anzuordnen und anschließend das Kanalformteil zusammen mit dem darin untergebrachten Luftsack an der Instrumententafel anzubringen. Die Ausbildung des Schusskanals an der Instrumententafel und die Anbringung des zusammengefalteten Luftsacks erfolgen mit anderen Worten in einem Arbeitsschritt.

Das Kanalformteil kann ein Kunststoffmaterial aufweisen und insbesondere ein Kunststoff-Spritzgussteil sein. Weist auch die Instrumententafel zumindest an ihrer zum Kanalformteil weisenden Seite ein Kunststoffmaterial auf, so lassen sich die Instrumententafel und das Kanalformteil mittels einer Schweißverbindung miteinander verbinden. Dadurch wird die Anbringung des Luftsackmoduls an der Instrumententafel noch weiter vereinfacht.

Vorteilhafterweise bildet das Kanalformteil zusätzlich wenigstens einen Belüftungskanal. Ein derartiges Kanalformteil stellt ein Multifunktionsteil dar, indem es nicht nur einen Schusskanal und ein Gehäuse für den Luftsack, sondern auch einen Belüftungskanal bildet. Eine separate Belüftungskanalstruktur ist somit überflüssig. Alternativ können Luftsackführung und Belüftungskanal auch separat voneinander sein.

Gemäß einer weiteren Ausführungsform ist der Gasgenerator im Bereich einer Gaszuführöffnung des Luftsackgehäuses zum Zuführen von Gas zu dem Luftsack angebracht. Auf diese Weise legt das aus dem Gasgenerator austretende Gas auf dem Weg in den Luftsack eine minimale Strecke zurück. Dies ermöglicht ein besonders schnelles Aufblasen des Luftsacks.

Vorteilhafterweise ist eine Dichtung zwischen Gasgenerator und Luftsackgehäuse und/oder zwischen Gasgenerator und einem Befestigungsmittel zum Befestigen des Gasgenerators an dem Luftsackgehäuse vorgesehen. Die Dichtung trägt dazu bei, dass das aus dem Gasgenerator austretende Gas besonders verlustarm in den Luftsack gelangen kann. Der Luftsack ist dadurch besonders effizient aufblasbar.

Bevorzugt ist an der Außenseite des Luftsackgehäuses wenigstens eine Dichtrippe vorgesehen, welche eine Gaszuführöffnung des Luftsackgehäuses zum Zuführen von Gas zu dem Luftsack ringartig umgibt. Eine derartige Dichtrippe stellt eine besonders einfache und wirkungsvolle Form der Dichtung dar.

Ein an dem Gasgenerator anliegender Abschnitt der Schelle kann mit jeweils wenigstens einer Dichtrippe versehen sein. Auf diese Weise ist die Schelle gegenüber dem Gasgenerator abgedichtet, und es wird ein unerwünschtes Entweichen von Gas aus dem Gaskanal wirksam verhindert.

Weiterer Gegenstand der Erfindung ist ein Verfahren zum Montieren eines Luftsackmoduls an einer Kraftfahrzeuginstrumententafel mit den Merkmalen des Anspruchs 9.

Bei dem erfindungsgemäßen Verfahren wird ein zusammengefalteter Luftsack in einem durch ein Kanalformteil gebildeten und gleichzeitig als Schusskanal für den sich aufblasenden Luftsack dienenden Luftsackgehäuse untergebracht, das Kanalformteil mit der Instrumententafel fest verbunden, und anschließend ein Gasgenerator zum Aufblasen des Luftsacks von dem Luftsack getrennt und gasdicht an dem Luftsackgehäuse angebracht. Dabei wird der Gasgenerator mittels einer Schelle an einer Außenseite des Luftsackgehäuses derart angebracht, dass die Schelle den Gasgenerator im Bereich von Gasaustrittsöffnungen des Gasgenerators umgibt und einen Gaskanal bildet, um aus dem Gasgenerator austretendes Gas zu einer Gaszuführöffnung des Luftsackgehäuses zu führen.

Das erfindungsgemäße Verfahren ermöglicht eine besonders einfache und kostengünstige Montage des Luftsackmoduls an der Instrumententafel, da weder ein separates Luftsackgehäuse, z.B. ein gemeinsames Gehäuse für den Luftsack und den Gasgenerator, benötigt wird, noch der Luftsack und der Gasgenerator gemeinsam als Einheit gehandhabt werden müssen. Durch die getrennte Montage von Luftsack und Gasgenerator wird außerdem die Gefahr eines unbeabsichtigten Aufblasens des Luftsacks bei der Montage minimiert. Die von dem Luftsack unabhängige Befestigung des Gasgenerators an dem Luftsackgehäuse erleichtert darüber hinaus einen Austausch des Gasgenerators, beispielsweise zu Wartungszwecken.

Nachfolgend wird die Erfindung rein beispielhaft anhand einer vorteilhaften Ausführungsform unter Bezugnahme auf die Zeichnung beschrieben.

Es zeigen:
- Fig. 1: eine Querschnittsansicht einer erfindungsgemäßen Instrumententafel; und
- Fig. 2: eine Querschnittsansicht eines an einem Luftsackgehäuse der Instrumententafel von Fig. 1 befestigten Gasgenerators.

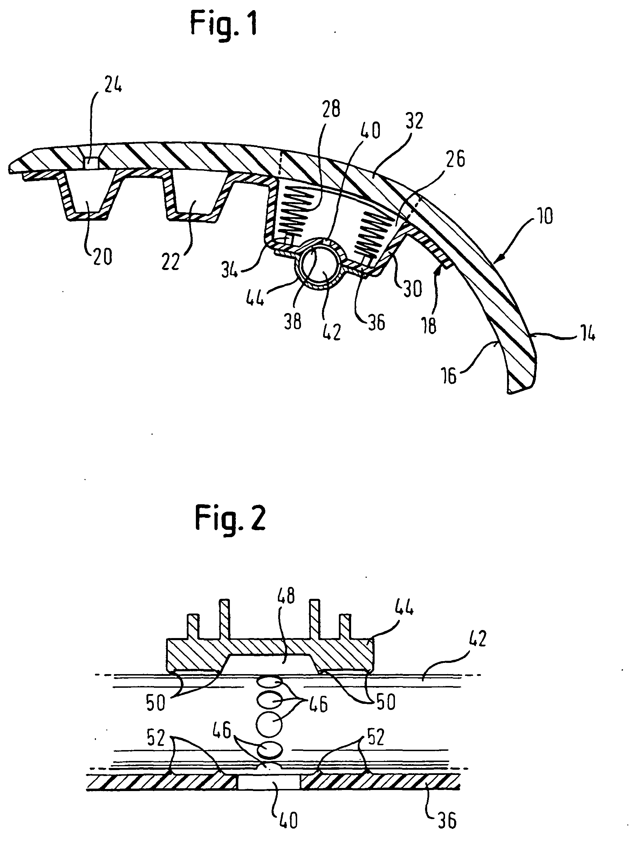

In Fig. 1 ist eine erfindungsgemäße Instrumententafel 10 für ein Kraftfahrzeug dargestellt. Die Instrumententafel 10 umfasst eine in Richtung Fahrzeuginneres weisende Vorderseite 14 und eine dem Fahrzeuginneren abgewandte Rückseite 16. Im vorliegenden Ausführungsbeispiel ist die Instrumententafel 10 aus einem Kunststoffmaterial gebildet, grundsätzlich kommen aber auch andere Materialien in Betracht.

An der Rückseite 16 ist ein Kanalformteil 18 fest mit der Instrumententafel 10 verbunden. Bei dem vorliegenden Ausführungsbeispiel ist das Kanalformteil 18 ein Kunststoff-Spritzgussteil, grundsätzlich kann das Kanalformteil 18 aber auch aus einem anderen Material oder durch ein anderes Verfahren gebildet sein.

Das Kanalformteil 18 und die Instrumententafel 10 sind bei dem dargestellten Ausführungsbeispiel miteinander verschweißt. Alternativ kann das Kanalformteil 18 aber auch auf andere Weise mit der Instrumententafel 10 verbunden sein, beispielsweise mittels einer Klebe- oder Schraubverbindung.

Das Kanalformteil 18 weist zwei (alternativ integrierte) Belüftungskanäle 20, 22 auf, durch die Frischluft oder Warmluft in einen Fahrzeuginnenraum einleitbar ist. In Fig. 1 ist exemplarisch eine Lüftungsöffnung 24 der Instrumententafel 10 dargestellt, durch die Frisch- oder Warmluft aus dem Belüftungskanal 20 in den Fahrzeuginnenraum strömen kann.

Das Kanalformteil 18 bildet ferner einen Schusskanal 26, in welchem ein zusammengefalteter Luftsack 28 untergebracht ist. Der Schusskanal 26 dient nicht nur dazu, den sich aufblasenden Luftsack 28 in eine Wunschausbreitungsrichtung zu lenken, sondern er bildet gleichzeitig auch ein Gehäuse 30 für den zusammengefalteten Luftsack 28. Damit sich der Luftsack 28 bei einem Unfall möglichst schnell entfalten und aus dem Luftsackgehäuse 30 austreten kann, weist die Instrumententafel 10 einen durch den Luftsack 28 verdrängbaren und insbesondere aufklappbaren Deckelabschnitt 32 auf, welcher das Luftsackgehäuse 30 im Normalfall verschließt.

Der Luftsack 28 ist auf bekannte Weise mittels eines Halterings 34 an einem Boden 36 des Luftsackgehäuses 30 verankert. Beispielsweise können nicht gezeigte Rastelemente des Halterings 34 in entsprechend ausgebildeten Rastöffnungen des Gehäusebodens 36 verrasten.

Der Boden 36 des Luftsackgehäuses 30 weist eine etwa halbzylindrische Vertiefung 38 auf, in deren Zentrum sich eine Gaszuführöffnung 40 befindet, welche die Zufuhr von aus einem Gasgenerator 40 austretendem Gas in den Luftsack 28 ermöglicht.

Der Gasgenerator 42 weist beim dargestellten Ausführungsbeispiel eine zylindrische Gestalt auf und ist in der zylindrischen Vertiefung 38 angeordnet. Mittels einer Schelle 44 ist der Gasgenerator 42 von außen an dem Boden 36 des Luftsackgehäuses 30 fixiert. Die Schelle 44 kann beispielsweise mittels einer Schraubverbindung an dem Luftsackgehäuse 30 befestigt sein.

Wie Fig. 2 zeigt, umgibt die Schelle 44 den Gasgenerator 42 in einem Bereich, in welchem mehrere Gasaustrittsöffnungen 46 des Gasgenerators 42 über den Umfang des Gasgenerators 42 verteilt angeordnet sind. Die Gasaustrittsöffnungen 46 des Gasgenerators 42 befinden sich im Bereich der Gaszuführöffnung 40 und sind vorzugsweise mit dieser ausgerichtet.

Die Schelle 44 liegt nicht ganzflächig an dem Gasgenerator 42 an, sondern sie bildet im Bereich der Gausaustrittsöffnungen 46 einen sich in Umfangsrichtung des Gasgenerators 42 erstreckenden Gaskanal 48, um aus den Gasaustrittsöffnungen 46 austretendes Gas zu der Gaszuführöffnung 40 des Luftsackgehäuses 30 zu leiten.

Um ein unbeabsichtigte Entweichen von Gas aus dem Gaskanal 48 zu verhindern, weist die Schelle 44 auf beiden Seiten des Gaskanals 48 jeweils zwei zueinander beabstandete Dichtrippen 50 auf, die sich parallel zum Gaskanal 48 erstrecken und mit der Außenseite des Gasgenerators 42 zusammenwirken.

Des Weiteren sind zwei Dichtrippen 52 an der Außenseite des Gehäusebodens 36 vorgesehen, die in Form konzentrischer Ringe die Gaszuführöffnung 40 des Luftsackgehäuses 30 umgeben, um ein unbeabsichtigtes Entweichen von aus dem Gasgenerator 42 austretendem Gas im Bereich zwischen Gasgenerator 42 und Luftsackgehäuse 30 zu verhindern.

Durch das Befestigen der Schelle 44 an dem Luftsackgehäuse 30 werden die Dichtrippen 50 der Schelle 44 an den Gasgenerator 42 und der Gasgenerator 42 an die Dichtrippen 52 des Gehäusebodens 36 angedrückt. Dadurch bildet der Gaskanal 48 der Schelle 44 über die Gaszuführöffnung 40 mit dem Inneren des Luftsacks 28 einen im Wesentlichen gasdicht verschlossenen Raum, der bei einer Aktivierung des Gasgenerators 42 ein schnelles und effizientes Aufblasen des Luftsacks 28 ermöglicht. Der Ausdruck "im Wesentlichen gasdicht" bedeutet im Rahmen dieser Anmeldung, dass jedenfalls nicht so viel Gas unbeabsichtigt entweichen kann, dass das Aufblasen des Luftsacks 28 dadurch signifikant beeinträchtigt würde.

Zur Montage des Luftsackmoduls an der Instrumententafel 10 wird der Luftsack 28 zunächst zusammengefaltet und in den Schusskanal 26 des Kanalformteils 18 eingesetzt, welches zu diesem Zeitpunkt noch ein separates Bauteil und nicht mit der Instrumententafel 10 verbunden ist. Die Fixierung des Luftsacks 28 am Kanalformteil 18 erfolgt durch Verrastung des Halterings 34 am Boden 36 des Luftsackgehäuseabschnitts des Kanalformteils 18.

Anschließend wird das Kanalformteil 18 mit der Instrumententafel 10 verbunden, z.B. verschweißt. Dabei wird das Kanalformteil 18 bezüglich der Instrumententafel 10 so positioniert, dass sich die Lüftungsöffnung 24 der Instrumententafel 10 im Bereich des zugeordneten Belüftungskanals 20 des Kanalformteils 18 befindet und das Luftsackgehäuse 30 durch den Deckelabschnitt 32 der Instrumententafel 10 verschlossen ist, der geöffnet und insbesondere aufgeklappt werden kann.

Danach wird der Gasgenerator 42 von außen an dem Luftsackgehäuse 30 angebracht und mittels einer Schelle 44 derart an dem Boden 36 des Luftsackgehäuses 30 fixiert, dass die Gasaustrittsöffnungen 46 des Gasgenerators 42 mit der Gaszuführöffnung 40 ausgerichtet sind. Durch die Schelle 44 wird der Gasgenerator 42 so fest an das Luftsackgehäuse 30 angedrückt, dass die Dichtrippen 50 der Schelle 44 und die Dichtrippen 52 des Gehäusebodens 36 für eine im Wesentlichen gasdichte Verbindung von Gasgenerator 42 und Luftsackgehäuse 30 sorgen.

### Bezugszeichenliste

- 10: Instrumententafel
- 14: Vorderseite
- 16: Rückseite
- 18: Kanalformteil
- 20: Belüftungskanal
- 22: Belüftungskanal
- 24: Lüftungsöffnung
- 26: Schusskanal
- 28: Luftsack
- 30: Luftsackgehäuse
- 32: Deckelabschnitt
- 34: Haltering
- 36: Gehäuseboden
- 38: Vertiefung
- 40: Gaszuführöffnung
- 42: Gasgenerator
- 44: Schelle
- 46: Gasaustrittsöffnung
- 48: Gaskanal
- 50: Dichtrippe
- 52: Dichtrippe

## Patentansprüche

1. Instrumententafel (10) für ein Kraftfahrzeug mit einem Schusskanal (26) für einen sich aufblasenden Luftsack (28), wobei der Schusskanal (26) gleichzeitig ein Luftsackgehäuse (30) bildet, in welchem der Luftsack (28) im zusammengefalteten Zustand untergebracht ist, und wobei ein Gasgenerator (42) zum Aufblasen des Luftsacks (28) von dem Luftsack (28) getrennt und gasdicht an dem Luftsackgehäuse (30) angebracht ist,
**dadurch gekennzeichnet, dass**
der Gasgenerator (42) mittels einer Schelle (44) an einer Außenseite des Luftsackgehäuses (30) angebracht ist, wobei die Schelle (44) den Gasgenerator (42) im Bereich von Gasaustrittsöffnungen (46) des Gasgenerators (42) umgibt und einen Gaskanal (48) bildet, um aus dem Gasgenerator (42) austretendes Gas zu einer Gaszuführöffnung (40) des Luftsackgehäuses (30) zu führen.

2. Instrumententafel (10) nach Anspruch 1,
**dadurch gekennzeichnet, dass**
der Schusskanal (26) durch ein separates Kanalformteil (18) gebildet ist.

3. Instrumententafel (10) nach Anspruch 2,
**dadurch gekennzeichnet, dass**
das Kanalformteil (18), z.B. mittels einer Schweißverbindung, fest mit der Instrumententafel (10) verbunden ist.

4. Instrumententafel (10) nach Anspruch 2 oder 3,
**dadurch gekennzeichnet, dass**
das Kanalformteil (18) zusätzlich wenigstens einen Belüftungskanal (20, 22) bildet.

5. Instrumententafel (10) nach einem der vorherigen Ansprüche,
**dadurch gekennzeichnet, dass**
der Gasgenerator (42) im Bereich einer Gaszuführöffnung (40) des Luftsackgehäuses (30) zum Zuführen von Gas zu dem Luftsack (28) angebracht ist.

6. Instrumententafel (10) nach einem der vorherigen Ansprüche,
**dadurch gekennzeichnet, dass**
eine Dichtung zwischen Gasgenerator (42) und Luftsackgehäuse (30) und/oder zwischen Gasgenerator (42) und einem Befestigungsmittel (44) zur Befestigung des Gasgenerators (42) an dem Luftsackgehäuse (30) vorgesehen ist.

7. Instrumententafel (10) nach einem der vorherigen Ansprüche,
**dadurch gekennzeichnet, dass**
an der Außenseite des Luftsackgehäuses (30) wenigstens eine Dichtfläche zum Gasgenerator, insbesondere eine Dichtrippe (52) vorgesehen ist, welche eine Gaszuführöffnung (40) des Luftsackgehäuses (30) zum Zuführen von Gas zu dem Luftsack (28) ringartig umgibt.

8. Instrumententafel (10) nach einem der vorherigen Ansprüche,
**dadurch gekennzeichnet, dass**
ein an dem Gasgenerator (42) anliegender Abschnitt der Schelle (44) mit jeweils wenigstens einer Dichtfläche, insbesondere einer Dichtrippe (50) versehen ist.

9. Verfahren zum Montieren eines Luftsackmoduls an einer Kraftfahrzeuginstrumententafel, bei dem
ein zusammengefalteter Luftsack (28) in einem durch ein Kanalformteil (18) gebildeten und gleichzeitig als Schusskanal (26) für den sich aufblasenden Luftsack dienenden Luftsackgehäuse (30) untergebracht wird,
das Kanalformteil (18) mit der Instrumententafel (10) fest verbunden wird, und
anschließend ein Gasgenerator (42) zum Aufblasen des Luftsacks (28) von dem Luftsack (28) getrennt und gasdicht an dem Luftsackgehäuse (30) angebracht wird,
**dadurch gekennzeichnet, dass**
der Gasgenerator (42) mittels einer Schelle (44) an einer Außenseite des Luftsackgehäuses (30) derart angebracht wird, dass die Schelle (44) den Gasgenerator (42) im Bereich von Gasaustrittsöffnungen (46) des Gasgenerators (42) umgibt und einen Gaskanal (48) bildet, um aus dem Gasgenerator (42) austretendes Gas zu einer Gaszuführöffnung (40) des Luftsackgehäuses (30) zu führen.

## Claims

1. An instrument panel (10) for a motor vehicle comprising a firing channel (26) for an inflating airbag (28), with the firing channel (26) simultaneously forming an airbag housing (30) in which the airbag (28) is accommodated in the folded state, and with a gas generator (42) for the inflation of the airbag (28) being attached to the airbag housing (30) separately from the airbag (28) and in a gas-tight manner,
**characterized in that** the gas generator (42) is attached to an outer side of the airbag housing (30) by means of a clamp (44), with the clamp (44) surrounding the gas generator (42) in the region of the gas discharge openings (46) of the gas generator (42) and forming a gas passage (48) in order to guide gas emerging from the gas generator (42) to a gas supply opening (40) of the airbag housing (30).

2. An instrument panel (10) in accordance with claim 1, **characterized in that** the firing channel (26) is formed by a separate channel shaped part (18).

3. An instrument panel (10) in accordance with claim 2, **characterized in that** the channel shaped part (18) is fixedly connected to the instrument panel (10) by means e.g. of a weld connection.

4. An instrument panel (10) in accordance with claim 2 or claim 3, **characterized in that** the channel shaped part (18) additionally forms at least one ventilation passage (20, 22).

5. An instrument panel (10) in accordance with any one of the preceding claims, **characterized in that** the gas generator (42) is attached in the region of a gas supply opening (40) of the airbag housing (30) for the supply of gas to the airbag (28).

6. An instrument panel (10) in accordance with any one of the preceding claims, **characterized in that** a seal is provided between the gas generator (42) and the airbag housing (30) and/or between the gas generator (42) and a fastening means (44) for the fastening of the gas generator (42) to the airbag housing (30).

7. An instrument panel (10) in accordance with any one of the preceding claims, **characterized in that** at least one sealing surface to the gas generator, in particular a sealing rib (52), is provided at the outer side of the airbag housing (30) and surrounds, in the manner of a ring, a gas supply opening (40) of the airbag housing (30) for the supply of gas to the airbag (28).

8. An instrument panel (10) in accordance with any one of the preceding claims, **characterized in that** a section of the clamp (44) contacting the gas generator (42) is provided with at least one respective sealing surface, in particular with a sealing rib (50).

9. A method for the installation of an airbag module to a motor vehicle instrument panel, wherein
a folded airbag (28) is accommodated in an airbag housing (30) formed by a channel shaped part (18) and simultaneously serving as a firing channel (26) for the inflating airbag;
the channel shaped part (18) is fixedly connected to the instrument panel (10); and
a gas generator (42) for the inflation of the airbag (28) is subsequently attached to the airbag housing (30) separately from the airbag (28) and in a gas-tight manner.
**characterized in that** the gas generator (42) is attached to an outer side of the airbag housing (30) by means of a clamp (44); **in that** the clamp (44) surrounds the gas generator (42) in the region of the gas discharge openings (46) of the gas generator (42) and forms a gas passage (48) in order to guide gas emerging from the gas generator (42) to a gas supply opening (40) of the airbag housing (30).

## Revendications

1. Tableau de bord (10) pour un véhicule automobile, comprenant un canal de propagation (26) pour un coussin à air gonflable (28), le canal de propagation (26) formant simultanément un boîtier pour le coussin à air (30), dans lequel le coussin à air (28) est logé à l'état plié, et un générateur de gaz (42) destiné à gonfler le sac à air (28) est monté séparément et de façon étanche au gaz sur le boîtier du coussin à air (30),
**caractérisé en ce que**
le générateur de gaz (42) est monté sur une face extérieure du boîtier de coussin à air (30) au moyen d'un collier, ledit collier (44) entourant le générateur de gaz (42) dans la zone des ouvertures de sortie de gaz (46) du générateur de gaz (42) et formant un canal de gaz (48), afin de guider le gaz qui sort du générateur de gaz (42) jusqu'à une ouverture d'entrée de gaz (40) du boîtier de coussin à air (30).

2. Tableau de bord (10) selon la revendication 1,
**caractérisé en ce que** le canal de propagation (26) est formé par une pièce moulée séparée formant canal (18).

3. Tableau de bord (10) selon la revendication 2,
**caractérisé en ce que** la pièce moulée formant canal (18) est reliée solidairement au tableau de bord (10), par exemple au moyen d'une liaison soudée.

4. Tableau de bord (10) selon la revendication 2 ou 3,
**caractérisé en ce que** la pièce moulée formant canal (18) forme en supplément au moins un canal de ventilation (20, 22).

5. Tableau de bord (10) selon l'une des revendications précédentes,
**caractérisé en ce que** le générateur de gaz (42) est monté dans la région d'une ouverture d'entrée de gaz (40) du boîtier de coussin à air (30) pour amener du gaz au coussin à air (28).

6. Tableau de bord (10) selon l'une des revendications précédentes,
**caractérisé en ce qu'**il est prévu un joint entre le générateur de gaz (42) et le boîtier de coussin à air (30) et/ou entre le générateur de gaz (42) et un moyen de fixation (44) pour la fixation du générateur de gaz (42) sur le boîtier de coussin à air (30).

7. Tableau de bord (10) selon l'une des revendications précédentes,
**caractérisé en ce qu'**il est prévu sur la face extérieure du boîtier de coussin à air (30) au moins une surface d'étanchéité, en particulier une nervure d'étanchéité (52) qui entoure sous forme annulaire une ouverture d'entrée de gaz (40) du boîtier de coussin à air (30) pour amener du gaz au coussin à air (28).

8. Tableau de bord (10) selon l'une des revendications précédentes,
**caractérisé en ce qu'**une portion du collier (44), appliquée contre le générateur de gaz (42), est pourvue d'au moins une surface d'étanchéité, en particulier d'une nervure d'étanchéité (50).

9. Procédé pour monter un module de coussin à air sur un tableau de bord d'un véhicule automobile, dans lequel
un coussin à air plié (28) est logé dans un boîtier de coussin à air (30) formé dans une pièce moulée formant canal (18) et servant simultanément de canal de propagation (26) pour le coussin à air en cours de gonflage,
la pièce moulée formant canal (18) est reliée de manière solidaire avec le tableau de bord (10), et
un générateur de gaz (42) destiné à gonfler le coussin à air (28) est finalement monté séparément vis-à-vis du coussin à air (28) et de manière étanche au gaz sur le boîtier de coussin à air (30),
**caractérisé en ce que**
le générateur de gaz (42) est monté sur une face extérieure du boîtier de coussin à air (30) au moyen d'un collier (44), de telle manière que le collier (44) entoure le générateur de gaz (42) dans la zone des ouvertures de sortie de gaz (46) du générateur de gaz (42), et forme un canal de gaz (48) afin de mener le gaz sortant hors du générateur de gaz (42) vers une ouverture d'entrée de gaz (40) du boîtier de coussin à air (30).
